# EUROPÄISCHE PATENTSCHRIFT

(11) **EP 3 015 415 B1**
(45) Veröffentlichungstag und Bekanntmachung des Hinweises auf die Patenterteilung: **04.04.2018**
(21) Anmeldenummer: 15188482.2
(22) Anmeldetag: 06.10.2015
(51) Int. Cl.: B66F 9/075, B62D 11/24

(54) **VERFAHREN ZUR LENKUNGSSTEUERUNG BEI EINEM FLURFÖRDERZEUG**
METHOD FOR STEERING CONTROL IN AN INDUSTRIAL TRUCK
PROCEDE DESTINE A LA COMMANDE DE DIRECTION D'UN CHARIOT DE MANUTENTION

(30) Priorität: 27.10.2014 DE 102014115582
(43) Veröffentlichungstag der Anmeldung: 04.05.2016
(73) Patentinhaber: STILL GmbH, 22113 Hamburg (DE)
(72) Erfinder: Tügel, Caspar, 20253 Hamburg (DE); Appeldorn, Matthias, 22159 Hamburg (DE); Rehder, Jan-Christian, 22144 Hamburg (DE)
(74) Vertreter: Patentship Patentanwaltsgesellschaft mbH

(56) Entgegenhaltungen:
- EP-A1- 1 118 581
- WO-A1-01/81235
- GB-A- 2 357 268
- US-A1- 2006 231 300

## Beschreibung

Die Erfindung betrifft ein Verfahren zur Lenkungssteuerung bei einem Flurförderzeug nach dem Oberbegriff des Patentanspruchs 1.

Gabelstapler als eine Form von Flurförderzeugen weisen in der Regel zwei Achsen auf. Dabei sind Fahrzeuge bekannt, die als Dreiradfahrzeuge ein einzelnes hinteres gelenktes Rad aufweisen, das zugleich oftmals auch als Antriebsrad dient. Bei diesen Fahrzeugen kann sehr einfach ein sehr kleiner Wendekreis erreicht werden, wenn dieses einzelne gelenkte Rad zu einem Winkel quer zur Fahrtrichtung gedreht werden kann, entsprechend einem minimalen Wendekreis. Dies ist insbesondere dann leicht möglich, wenn dieses einzelne gelenkte Rad zugleich auch das Antriebsrad ist, wie bei einer Vielzahl von Schubmaststaplern. Daneben ist eine sehr weit verbreitete Bauform die eines Vierradstaplers, insbesondere bei Gegengewichtsgabelstaplern. Bei diesen Vierradstaplern sind die Räder einer Antriebsachse angetrieben und im Regelfall die Räder der anderen, nicht angetriebenen Lenkachse, lenkbar.

Üblicherweise ist dabei die Antriebsachse bei einem Gegengewichtsgabelstapler die vordere Achse, auf die möglichst direkt das Gewicht eines Hubmastes und der auf einem Lastaufnahmemittel des Hubmastes aufgenommenen Last abgestützt wird. Die Räder der hinteren Lenkachse, die unterhalb eines Gegengewichts angeordnet ist, sind nicht angetrieben und lenkbar.

Bei einer Kurvenfahrt muss an den nicht gelenkten Antriebsrädern ein Differenzialausgleich der Drehzahl zwischen rechter und linker Seite stattfinden. Neben bekannten Ausführungen mit einem Antriebsmotor und einem Differenzialgetriebe ist es dabei bekannt, die Antriebsräder durch zwei elektrische Fahrantriebsmotoren direkt oder gegebenenfalls über je ein Untersetzungsgetriebe jeweils einzeln anzutreiben. Der Differenzialausgleich kann dann durch eine gezielte Ansteuerung der beiden Fahrantriebsmotoren erfolgen, indem für jeden der Fahrantriebsmotoren eine dem Kurvenradius und der Fahrgeschwindigkeit entsprechende Drehzahl des Fahrantriebsmotors festgelegt wird. Der Kurvenradius wird hierfür durch Sensoren, beispielsweise durch Erfassen eines Lenkeinschlagwinkels an einem Lenkrad, oder den gelenkten Rädern bestimmt.
Die Geometrie der gelenkten Räder bei solchen Vierradstaplern entspricht im Regelfall einer Achsschenkellenkung. Bei dieser werden die beiden gelenkten Räder einzeln so eingestellt, dass deren Achsen sich auf einer Vorderachslinie schneiden, die durch die Drehachse beider Antriebsräder läuft. Dieser Schnittpunkt entspricht dem Mittelpunkt der Kurvenfahrt des Flurförderzeugs und der Wendekreis wird durch den radial äußersten Punkt des Flurförderzeugs bestimmt, der um diesen Schnittpunkt sich bei der Kurvenfahrt des Flurförderzeugs kreisförmig bewegt. Der kleinste Kurvenradius ist dabei in der Regel zu erreichen, wenn dieser Schnittpunkt in der Mitte der Vorderachse in der Fahrzeugmittellinie zu liegen kommt. Dies entspricht einer Stellung der Hinterräder, bei der diese jeweils einen Winkel von fast 90° gegenüber der Fahrzeuglängsrichtung einnehmen. Wenn der Schnittpunkt auf der Vorderachslinie zwischen den beiden Antriebsrädern liegt, muss für den Differenzialausgleich eine gegenläufige Drehbewegung der Vorderräder erreicht werden. Im Regelfall ist dies nur mit einem Einzelradantrieb durch elektrische Fahrantriebsmotoren umsetzbar.
Eine bekannte und kostengünstige Bauform für die Lenkachse ist eine Achsschenkellenkung, bei der die Einschlagwinkel beider gelenkter Räder über ein Koppelgetriebe miteinander gekoppelt sind, insbesondere über eine Spurstange.
Nachteilig an diesem Stand der Technik ist jedoch, dass die Einschlagwinkel für gelenkte Räder, die mit einer Spurstange verbunden sind, begrenzt sind.
Die US 2006/231300 A1 offenbart ein Fahrzeug, mit dessen Fahrzeugsteuerung über einzeln regelbare Bremsen die Drehzahl der Antriebsräder entsprechend einem elektrischen Differenzial abgebremst wird zur Erzeugung eines Drehzahlunterschieds. Durch eine größere Drehzahldifferenz, als dem Lenkradius entspricht, kann ein kleinerer Lenkradius des Fahrzeugs erreicht werden.
Die EP 1 118 581 A1, betrifft einen hydraulischen Antrieb eines Gabelstaplers, bei dem durch eine Drehzahldifferenz der Lenkradius vermindert werden kann.

Die WO 01/81235 A1 offenbart den Oberbegriff des Anspruchs 1.

Der vorliegenden Erfindung liegt daher die Aufgabe zugrunde, ein Verfahren zur Steuerung einer Lenkung bei einem Flurförderzeug zur Verfügung zu stellen, das die oben genannten Nachteile vermeidet, und mit dem ein möglichst kleiner Wendekreis zu erreichen ist, sowie das möglichst wenig Reifenverschleiß erzeugt.

Diese Aufgabe wird durch ein Verfahren zur Lenkungssteuerung bei einem Flurförderzeug mit den Merkmalen des unabhängigen Patentanspruchs 1 gelöst. Vorteilhafte Weiterbildungen der Erfindung sind in den Unteransprüchen angegeben.

Die Aufgabe wird dadurch gelöst, dass bei einem Verfahren zur Steuerung der Lenkung eines Flurförderzeugs, das eine Antriebsachse mit in ihrer Drehzahl einzeln regelbaren Antriebsrädern, insbesondere durch jeweils einen Fahrantriebsmotor einzelnen angetriebenen Antriebsräder, aufweist sowie mit einer Lenkachse mit gelenkten Rädern, deren Drehachsen bei Kurvenfahrt im Wesentlichen auf einen gemeinsamen Schnittpunkt auf einer Vorderachslinie ausgerichtet ist, die durch die Drehachse der Antriebsräder definiert ist, wobei in einem ersten Kurvenfahrmodus durch eine Steuerung eine Drehzahldifferenz der Antriebsräder entsprechend dem Radius zu dem Schnittpunkt sowie der Kurvenfahrgeschwindigkeit eingestellt wird, bei maximalem Einschlag der gelenkten Räder in einem zweiten Kurvenfahrmodus durch die Steuerung eine größere Drehzahldifferenz der Antriebsräder eingestellt wird, als dem geometrischen Radius zu dem Schnittpunkt entspricht, so dass die gelenkten Räder der Lenkachse einen Schräglauf zeigen und um einen virtuellen Schnittpunkt mit einem kleineren Radius als den geometrischen Radius laufen. Erfindungsgemäß erfolgt beim Übergang vom ersten Kurvenfahrmodus in den zweiten Kurvenfahrmodus eine optische und/oder akustische und/oder taktile Rückmeldung für den Fahrer.

Wenn auf ein rollendes Rad eine seitliche Kraft wirkt, so stellt sich abhängig von der Elastizität des Reifens ein Schräglaufwinkel ein und eine scheinbare Drehachse des Rades, entsprechend der tatsächlichen Laufrichtung, weicht von der mechanischen Drehachse des Rades ab. Wenn in dem zweiten Kurvenfahrmodus die Drehzahldifferenz größer eingestellt wird, so werden auf die bereits voll eingeschlagenen gelenkten Räder der Lenkachse seitliche Kräfte ausgeübt. Durch diese stellt sich ein Schräglauf ein und scheinbare Drehachsen bilden einen virtuellen Schnittpunkt auf der Vorderachslinie, der abhängig von der Drehzahldifferenz und dem durch die Elastizität der Reifen möglichen Schräglaufwinkel sich näher zum Mittelpunkt zwischen den beiden Antriebsrädern auf der Vorderachslinie verschiebt. Dadurch wird eine erhebliche Verringerung des Wendekreises erreicht, da die vier Räder auf Kreisbahnen um diesen virtuellen Schnittpunkt sich bewegen und der Wendekreis durch den äußersten Punkt des Flurförderzeugs mit dem größten Radius zu diesem virtuellen Schnittpunkt bestimmt wird. Je näher dieser virtuelle Schnittpunkt daher an der Mitte zwischen den beiden Antriebsrädern liegt, desto kleiner ist der Wendekreis bei einem Fahrzeug mit zwei starren Antriebsrädern an der Antriebsachse und gelenkten Räder an der zweiten Lenkachse bzw. Hinterachse. Eine solche Minimierung des Kurvenradius ist in engen Arbeitsgängen besonders vorteilhaft. Dabei kann auch bei Fahrzeugen mit einer Achsschenkellenkung, bei denen der maximale Einschlagwinkel der gelenkten Rädern aus geometrischen Gründen begrenzt ist, der Kurvenradius bzw. Wendekreis weiter so verkleinert werden, dass auch in engen Gängen eines Lagers rangiert werden kann. Vorteilhaft ergeben sich Kosteneinsparungen, weil keine aufwendigen und kostenverursachenden Konstruktionen bei Vierradstaplern erforderlich sind. Die Lagerfläche kann optimal klein gehalten werden. Die bei Gegengewichtsgabelstaplern beispielsweise häufig eingesetzten Superelastikreifen sind Vollgummireifen, die eine relativ hohe Elastizität aufweisen, um eine Stoßdämpfung zu ermöglichen. Dadurch sind auch relativ große Schräglaufwinkel möglich. Es ist auch denkbar, das beschriebene Verfahren bei einem Stapler bzw. Flurförderzeug einzusetzen, der nur ein einzelnes gelenktes Rad an einer Lenkachse aufweist, wenn dieses einzelne, gelenkte Rad nicht weit genug eingeschlagen werden kann. Ein Schräglaufwinkel, insbesondere ein größerer Schräglaufwinkel der Antriebsräder ist mit Reifenverschleiß verbunden und erfordert einen höheren Energieverbrauch des Fahrantriebs. Daher ist es vorteilhaft, wenn beim Übergang in den zweiten Kurvenfahrmodus, wenn diese unvermeidlichen Nachteile auftreten, der Fahrer hierüber informiert wird. Durch vorausschauende Fahrweise kann eine Fahrlinie für das Flurförderzeug gewählt werden, die Zeiträume in dem zweiten Kurvenfahrmodus minimiert. Der Fahrer wird jedes Mal beim Erreichen des zweiten Kurvenfahrmodus sensibilisiert. Die optische Rückmeldung kann dabei beispielsweise aus einer Leuchte, einer Meldung in einem Display oder ähnlichem bestehen. Als akustische Rückmeldung ist ein Tonsignal oder auch ein Summer denkbar. Als taktile Rückmeldung ist jede Art von Rückmeldung denkbar, die der Fahrer fühlen kann, so eine Erhöhung von Betätigungskräften, Vibrationen oder ähnliches.

In einer vorteilhaften Ausgestaltung des Verfahrens können durch die Drehzahldifferenz die Antriebsräder gegenläufige Drehrichtungen aufweisen und der virtuelle Schnittpunkt kann auf der Vorderachslinie zwischen den Antriebsrädern liegen.

Beispielsweise kann bei einem Schnittpunkt der Drehachsen der voll eingeschlagenen Räder auf der Vorderachslinie, der noch außerhalb der Antriebsachse liegt, eine Drehzahldifferenz mit gegenläufigen Drehzahlen, den virtuellen Schnittpunkt bis in den Bereich innerhalb der angetriebenen Räder der Antriebsachse auf der Vorderachslinie verschieben und somit einen Wendekreis nahe an den minimal möglichen mit nahezu quer gestellten gelenkten Rädern der Hinterachse ermöglichen.

Vorteilhaft werden die Antriebsräder jeweils durch einen elektrischen Fahrantriebsmotor einzelnen angetrieben.

Bei einem batterie-elektrisch angetriebenen Flurförderzeug oder auch bei einem durch einen Verbrennungsmotor über einen Generator elektrisch angetriebenen Flurförderzeug kommt häufig an jedem Antriebsrad ein einzelner elektrischer Fahrantriebsmotor zum Einsatz. Dieser elektrische Fahrantriebsmotor kann dabei noch über ein Getriebe mit dem Antriebsrad verbunden sein. Das beschriebene Verfahren lässt sich bei solchen Flurförderzeugen besonders vorteilhaft und kostengünstig umsetzen, da für die Ansteuerung der Fahrantriebsmotoren bereits eine Steuerung mit entsprechender Leistungselektronik vorhanden ist. Insbesondere wird im Regelfall bereits eine Differenzialsteuerung für die Kurvenfahrt durchgeführt.

Die gelenkten Räder können durch eine Spurstange verbunden sein.

Eine Führung der gelenkten Räder über eine Spurstange und einen Hydraulikzylinder oder ein entsprechendes Lenkgetriebe ist robust, kostengünstig und zuverlässig. Eine solche Bauart wird daher häufig eingesetzt bei Gegengewichtsgabelstaplern oder Vierradstaplern. Durch das beschriebene Verfahren kann vorteilhaft der Nachteil des nur beschränkt möglichen Maximaleinschlagwinkels ausgeglichen werden.

In einer Weiterbildung des Verfahrens erfolgt in dem zweiten Kurvenfahrmodus eine optische und/oder akustische und/oder taktile Rückmeldung für den Fahrer.

Zusätzlich zu der zuvor beschriebenen Rückmeldung beim Übergang in den zweiten Kurvenfahrmodus kann während der gesamten Betriebszeit, in der sich das Flurförderzeug in dem zweiten Kurvenfahrmodus befindet und somit ein erhöhter Energieverbrauch sowie Reifenverschleiß auftreten kann, eine Rückmeldung an den Fahrer erfolgen. Neben dem zuvor beschriebenen, kurzen Signal im Übergangsbereich zwischen dem ersten Kurvenfahrmodus und dem zweiten Kurvenfahrmodus kann die Rückmeldung insbesondere ein für die Dauer des Aufenthalts im zweiten Kurvenfahrmodus anhaltendes Signal sein. Besonders vorteilhaft ist dabei ein veränderliches Signal als Rückmeldung für den Fahrer, sodass dem Fahrer auch ein Hinweis über den Grad einer Abweichung gegenüber der Fahrt mit dem maximalen Lenkeinschlag ohne Verringerung des Wendekreises gegeben wird. Auch hier können die zuvor beschriebenen Beispiele der Arten der Rückmeldung auf akustische, optische und taktile Weise zum Einsatz kommen.

Vorteilhaft besteht die taktile Rückmeldung aus einer erhöhten Betätigungskraft einer Lenkvorrichtung, insbesondere eines Lenkrades.

Bei den beschriebenen Flurförderzeugen kommen Lenkungen zum Einsatz, die keine mechanische Verbindung zwischen einer Lenkbetätigung, insbesondere einem Lenkrad, und einem Lenkantrieb der gelenkten Räder aufweisen. Bei solchen Lenkungen wird ein solches Signal von einer Lenkbetätigung durch Sensoren aufgenommen und an einen Stellantrieb für die gelenkten Räder übertragen. Für eine Rückmeldung an einen Fahrer kann dabei ein Aktuator vorgesehen sein, der elektromagnetisch, elektrorheologisch, piezoelektrisch oder nach anderen physikalischen Effekten arbeitet. Durch eine Erhöhung der Reibung kann beispielsweise ein Gegenmoment erzeugt werden, wenn der zweite Kurvenfahrmodus erreicht wird oder eine Betätigung innerhalb des zweiten Kurvenfahrmodus stattfindet. Bei einer mechanischen Übertragung der Lenkkräfte bzw. einer hydrostatischen Lenkung, die per Hydraulikfluid die Lenkbefehle überträgt, erhöht sich die Betätigungskraft einer Lenkbetätigung bzw. ein Drehmoment eines Lenkrades abrupt und sehr deutlich, wenn der maximale Lenkwinkel erreicht wird und die gelenkten Räder gegen einen Lenkanschlag anstoßen bzw. die Lenkbetätigung an einen Anschlag kommt. Bei einer hydrostatischen Lenkung arbeitet dann beispielsweise eine Stell- oder Justiervorrichtung gegen den Anschlag.

Vorteilhaft wird die erhöhte Betätigungskraft durch eine zusätzliche Federkraft vor einem Anschlag der Lenkvorrichtung bewirkt.

Dadurch kann in einem Übergangsbereich der abrupte Anstieg in einen weiteren Bereich eines spürbaren Anstiegs der Betätigungskraft bzw. eines Drehmomentes eines Lenkrades umgewandelt werden. Es ergibt sich dann beispielsweise ein zusätzlicher, federbelastete Arbeitsbereich der Lenkbetätigung bzw. ein zusätzlicher Drehbereich des Lenkrades, der beim oder nach dem Erreichen des Anschlags der Lenkachse unter erhöhtem Kraftaufwand eine weitere Verringerung des Wendekreises ermöglicht. Erst in diesem Bereich erfolgt der Wechsel in den zweiten Kurvenfahrmodus.

Es ist möglich, dass die erhöhte Betätigungskraft durch einen Anschlag der Lenkvorrichtung bewirkt wird, bei dessen Erreichen mit einer Zeitverzögerung, insbesondere nach 100 ms, der zweite Kurvenfahrmodus von der Steuerung eingestellt wird.

Dadurch wird eine sehr einfache Ausführungsform möglich, die keine mechanischen Zusatzeinrichtungen oder ein Aktuator benötigt. Die Rückmeldung erfolgt bereits dadurch, dass die Lenkbetätigungsvorrichtung bzw. ein Lenkrad gegen den Anschlag kommt.

Es kann durch einen Sensor eine Betätigungskraft der Lenkvorrichtung erfasst werden.

Durch einen Sensor kann ein Betätigungsweg, insbesondere ein Drehwinkel, der Lenkvorrichtung erfasst werden.

Die Steuerung kann das Erreichen eines Anschlages und/oder das Erreichen eines zweiten Betätigungsbereiches für den zweiten Kurvenfahrmodus erfassen, indem entsprechende Sensoren vorgesehen sind. Solche Sensoren können beispielsweise einen Verdrehwinkel eines Lenkrads, einen Stellweg einer Lenkbetätigung, ein Drehmoment eines Lenkrads oder einen hydraulischen Druck bei einer hydrostatischen oder hydraulischen Lenkung erfassen.

Die taktile Rückmeldung kann aus einer durch einen Fahrer wahrnehmbaren Vibration bestehen.

Es kann eine Vibration einer Lenkbetätigungsvorrichtung, insbesondere eines Lenkrades und/oder eines Lenkradknaufes, und/oder eine Vibration einer Bodenplatte und/oder eines Fahrpedal erzeugt werden.

In einer weiteren Ausführungsform wird eine Vibration des Fahrantriebs durch die Steuerung erzeugt.

Ein Vibrieren des Fahrantriebs kann dabei erreicht werden, indem die Ansteuerung der Fahrantriebsmotoren entsprechend moduliert wird. Durch Vibrationssignale als Rückmeldung an den Fahrer, die von diesem gefühlt werden können, wird der Fahrer auf intuitive Art und Weise angehalten, die Nutzung des zweiten Kurvenfahrmodus möglichst zu minimieren, die erhöhten Reifenverschleiß und Energieverbrauch mit sich bringt.

Es kann zugleich eine Minimierung des Reifenverschleißes und Energieverbrauchs in der Praxis erreicht werden und es können minimierte Arbeitsgangbreiten zum Einsatz kommen, soweit dies erforderlich ist. Weiterhin ist es vorteilhaft, wenn entsprechend einer oben beschriebenen Ausführungsform der zweite Kurvenfahrmodus nur in dem Bereich des Lenkanschlages zugeschaltet wird und dadurch bis zu diesem Bereich ein Verschleiß- und verbrauchsoptimierter Bereich vorliegt.

Es ist auch denkbar, eine automatische oder manuelle Zuschaltung des zweiten Kurvenfahrtbereiches vorzusehen. Beispielsweise kann bei einem Einsatz des Flurförderzeugs in einem beengten Umfeld abweichend von dem sonstigen Standardumfeld des Einsatzes ein Wenderadius optimierter Betrieb zugelassen werden, der den zweiten Kurvenfahrmodus ermöglicht. Im sonstigen Umfeld des Betriebsgeländes bzw. Standardumfeld wird dagegen dieser Betrieb nicht ermöglicht. Dadurch wird der Energieverbrauch und Reifenverschleiß unabhängig vom Fahrer im normalen Umfeld des Betriebsgeländes minimiert.

Weiterhin ist es auch denkbar, die Häufigkeit und die Zeitanteile des Betriebs in dem zweiten Kurvenfahrmodus zu erfassen sowie zu speichern. Durch eine Auswertung der Daten kann eine Optimierung der Schulung der Fahrer wie auch einer Planung der Betriebsabläufe in einem Einsatzbereich der Flurförderzeuge erfolgen. Ebenso ist auch eine direkte Auswertung und ergänzende Rückmeldung an den Fahrer denkbar und eine Verwertung dieser Daten für eine Reifenverschleißprognose und/oder einen Wartungsintervallrechner.

Weitere Vorteile und Einzelheiten der Erfindung werden anhand des in den schematischen Figuren dargestellten Ausführungsbeispiels näher erläutert. Hierbei zeigt
- Fig. 1: ein Beispiel eines Vierradstapler mit beliebig weit einschlagbaren gelenkten Rädern einer Lenkachse,
- Fig. 2: ein Beispiel eines Vierradstapler mit maximalem Einschlag der gelenkten Räder der Lenkachse und
- Fig. 3: den Vierradstapler der Fig. 2, bei dem das erfindungsgemäße Verfahren zum Einsatz kommt.

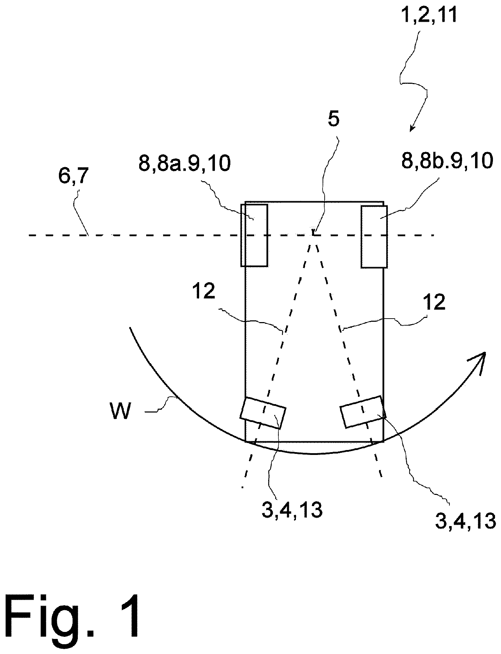

Die Fig. 1 zeigt ein Beispiel eines Vierradstapler 1, als Beispiel eines Flurförderzeugs 2, mit beliebig weit einschlagbaren gelenkten Rädern 3 einer Lenkachse 4. dabei ist bei diesem Ausführungsbeispiel eines Flurförderzeugs 2 der Einschlagwinkel der gelenkten Räder 3 beliebig weit einstellbar, beispielsweise, weil diese einzelnen drehbar angebracht sind. Dargestellt ist ein Einschlagwinkel der gelenkten Räder 3, der zu einem minimalen Wendekreis W führt. Die Drehachsen 12 der gelenkten Räder 3 schneiden sich in einem gemeinsamen Schnittpunkt 5, der auf einer Vorderachslinie 6 liegt. Die Vorderachslinie 6 ist dadurch definiert, dass diese der Drehachse 7 von angetriebenen Antriebsrädern 8 des Flurförderzeugs 2 an einer Antriebsachse 9 entspricht. Die Antriebsachse 9 entspricht dabei einer Vorderachse 10, auf die beispielsweise ein hier nicht dargestellter Hubmast mit Lastaufnahmemitteln sein Gewicht bei einem Gabelstapler 11 als Ausführungsbeispiel des Flurförderzeugs 2 abstützt. Die Lenkachse 4 entspricht einer Hinterachse 13.

Die Antriebsräder 8 teilen sich auf in ein linkes Antriebsrad 8a, das bei der dargestellten Betriebsweise rückwärts dreht, und ein rechtes Antriebsrad 8b, das bei der dargestellten Betriebsweise mit der gleichen Drehzahl vorwärts dreht. Dadurch umlaufen alle Antriebsräder 8 sowie gelenkten Räder 2 den Schnittpunkt 5 und der Wendekreis W wird durch den radial am weitesten von dem Schnittpunkt 5 entfernliegenden Punkt der Karosserie des Flurförderzeugs 2 bestimmt.

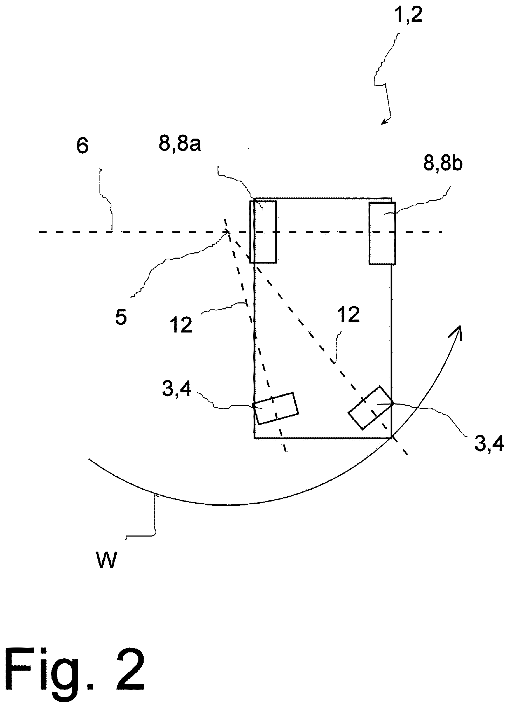

Die Fig. 2 zeigt ein Beispiel eines Vierradstapler 1 als Beispiel eines Flurförderzeugs 2 mit maximalem Einschlag der gelenkten Räder 3 der Lenkachse 4. Den Bauteilen und Komponenten der Fig. 1 entsprechende sind mit denselben Bezugszeichen versehen. Die Drehachsen 12 der gelenkten Räder 3 an der Lenkachse 4 bilden hier nun einen Schnittpunkt 5 auf der Vorderachslinie 6 der Antriebsräder 8, der außerhalb des linken sowie rechten Antriebsrades 8a, 8b liegt, da ein weiterer Einschlag der gelenkten Räder 3 nicht möglich ist. Beispielsweise kann der Einschlag der gelenkten Räder 3 dadurch begrenzt sein, dass diese durch eine Spurstange verbunden sind.

Die nicht dargestellten Fahrantriebsmotoren der Antriebsräder 8 in Verbindung mit einer ebenfalls nicht dargestellten Steuerung erzeugen für das linke Antriebsrad 8a und das rechte Antriebsrad 8b dem jeweiligen Radius des Antriebsrades 8 und der Fahrgeschwindigkeit entsprechende unterschiedliche Drehzahlen. Das Flurförderzeug 2 durchfährt einen gegenüber der Fig. 1 erheblich größeren Wendekreis W.

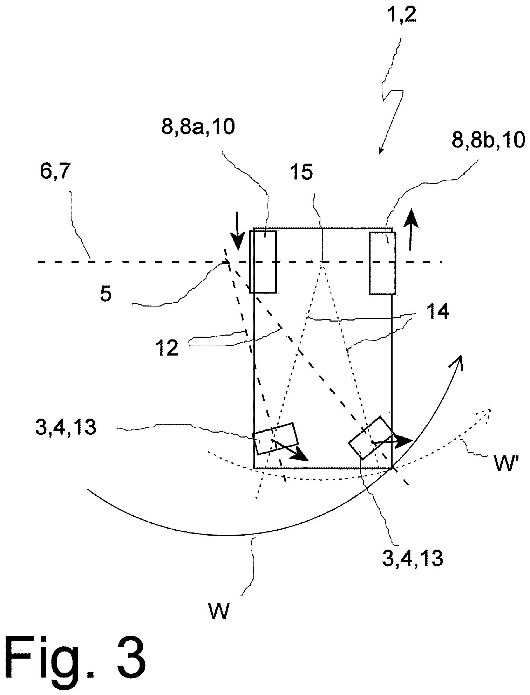

Die Fig. 3 zeigt den Vierradstapler 1 der Fig. 2 als Flurförderzeug 2, bei dem das erfindungsgemäße Verfahren zum Einsatz kommt. Die Drehachsen 12 der gelenkten Räder 3 an der Lenkachse 4 und zugleich Hinterachse 13 bilden hier wiederum einen Schnittpunkt 5 auf der Vorderachslinie 6 der Antriebsräder 8, der außerhalb des linken sowie rechten Antriebsrades 8a, 8b liegt, da ein weiterer Einschlag der gelenkten Räder 3 nicht möglich ist. Die Vorderachslinie 6 wird durch die Drehachse 7 der Antriebsräder 8 der Vorderachse 10 und zugleich Antriebsachse 9 gebildet. Es ergäbe sich somit wiederum der große Wendekreis W.

Entsprechend dem zuvor beschriebenen Verfahren wird das linke Antriebsrad 8a jedoch von der Steuerung mit einer Drehzahl rückwärts laufend und das rechte Antriebsrades 8b mit der gleichen Drehzahl vorwärts laufen angetrieben, wie durch die Pfeile verdeutlicht. Dies ergibt eine größere Drehzahldifferenz der Antriebsräder 8, als sie durch den Radius der Antriebsräder 8 gegenüber dem Schnittpunkt 5 sowie durch die gewünschte Kurvengeschwindigkeit vorgegeben wäre. Als Folge wird auf die gelenkten Räder 3 der Lenkachse 4 eine seitliche Kraft ausgeübt und die gelenkten Räder 3 in ihrer maximalen Anschlagstellung laufen mit einem Schräglaufwinkel, wie durch die Pfeile verdeutlicht. Dadurch ergeben sich virtuelle Drehachsen 14 der gelenkten Räder 3, die der tatsächlichen Laufrichtung entsprechen und die sich in einem virtuellen Schnittpunkt 15 auf der Vorderachslinie 6 schneiden. Um diesen virtuellen Schnittpunkt 15 dreht sich das Flurförderzeug 2 bei der Kurvenfahrt und es ergibt sich ein deutlich verringerter Wendekreis W'.

Im optimalen Fall, der in der Figur dargestellt ist, liegt der virtuelle Schnittpunkt 15 in der Mitte zwischen dem linken Antriebsrad 8 A und dem rechten Antriebsrad 8b auf der Vorderachslinie 6 und es ergibt sich der kleinstmögliche Wendekreis W'.

In einem ersten Kurvenfahrmodus wird bei dem beschriebenen Flurförderzeug eine Drehzahldifferenz zwischen rechten Antriebsrades 8b und linken Antriebsrades 8a eingestellt, die dem Radius zu dem Schnittpunkt 5 und der Kurvenfahrgeschwindigkeit entspricht, solange die gelenkten Räder 3 sich nicht an ihrem Anschlag befinden. Wenn die gelenkten Räder 3 den Anschlag ihres maximalen Lenkausschlages erreichen, erzeugt die Steuerung in einem zweiten Kurvenfahrmodus eine zunehmend größere Drehzahldifferenz, um einen kleineren Wendekreis zu erreichen.

Beim Erreichen des zweiten Kurvenfahrmodus bzw. alternativ oder gleichzeitig in dem zweiten Kurvenfahrmodus kann eine optische und/oder akustische und/oder taktile Rückmeldung für den Fahrer erfolgen. Dies ist jedoch nicht zwingend. Durch eine solche Rückmeldung erfährt der Fahrer, dass nun ein erhöhter Reifenverschleiß sowie Energieverbrauch auftritt. Die Rückmeldung kann auf alle zuvor und oben beschriebenen Arten erfolgen. Beispielsweise kann ein Lenkrad als Betätigungsvorrichtung für die Lenkung einen Drehbereich mit einem erhöhten Kraftaufwand aufweisen und/oder eine Rückmeldung durch ein vibrieren des Lenkrads erfolgen.

## Patentansprüche

1. Verfahren zur Steuerung der Lenkung eines Flurförderzeugs (2), das eine Antriebsachse (9) mit in ihrer Drehzahl einzeln regelbaren Antriebsrädern (8,8a,8b), insbesondere durch jeweils einen Fahrantriebsmotor einzelnen angetriebenen Antriebsräder (8,8a,8b), aufweist sowie mit einer Lenkachse (4) mit gelenkten Rädern (3), deren Drehachsen (12) bei Kurvenfahrt im Wesentlichen auf einen gemeinsamen Schnittpunkt (5) auf einer Vorderachslinie (6) ausgerichtet ist, die durch die Drehachse (7) der Antriebsräder (8,8a,8b) definiert ist, wobei in einem ersten Kurvenfahrmodus durch eine Steuerung eine Drehzahldifferenz der Antriebsräder (8,8a,8b) entsprechend dem Radius zu dem Schnittpunkt (5) sowie der Kurvenfahrgeschwindigkeit eingestellt wird,
**dadurch gekennzeichnet,**
**dass** bei maximalem Einschlag der gelenkten Räder (3) in einem zweiten Kurvenfahrmodus durch die Steuerung eine größere Drehzahldifferenz der Antriebsräder (8,8a,8b) eingestellt wird, als dem geometrischen Radius zu dem Schnittpunkt (5) entspricht, so dass die gelenkten Räder (3) der Lenkachse (4) einen Schräglauf zeigen und um einen virtuellen Schnittpunkt (15) mit einem kleineren Radius als den geometrischen Radius laufen, wobei beim Übergang vom ersten Kurvenfahrmodus in den zweiten Kurvenfahrmodus eine optische und/oder akustische und/oder taktile Rückmeldung für den Fahrer erfolgt.

2. Verfahren nach Anspruch 1,
**dadurch gekennzeichnet,**
**dass** durch die Drehzahldifferenz die Antriebsräder (8,8a,8b) gegenläufige Drehrichtungen aufweisen und der virtuelle Schnittpunkt (15) auf der Vorderachslinie (6) zwischen den Antriebsrädern (8,8a,8b) liegt.

3. Verfahren nach Anspruch 1 oder 2,
**dadurch gekennzeichnet,**
**dass** die Antriebsräder (8,8a,8b) jeweils durch einen elektrischen Fahrantriebsmotor einzelnen angetrieben werden.

4. Verfahren nach einem der Ansprüche 1 bis 3,
**dadurch gekennzeichnet,**
**dass** die gelenkten Räder (3) durch eine Spurstange verbunden sind.

5. Verfahren nach einem der Ansprüche 1 bis 4,
**dadurch gekennzeichnet,**
**dass** in dem zweiten Kurvenfahrmodus eine optische und/oder akustische und/oder taktile Rückmeldung für den Fahrer erfolgt.

6. Verfahren nach einem der Ansprüche 1 bis 5,
**dadurch gekennzeichnet,**
**dass** die taktile Rückmeldung aus einer erhöhten Betätigungskraft einer Lenkvorrichtung, insbesondere eines Lenkrades, besteht.

7. Verfahren nach Anspruch 6,
**dadurch gekennzeichnet,**
**dass** die erhöhte Betätigungskraft durch eine zusätzliche Federkraft vor einem Anschlag der Lenkvorrichtung bewirkt wird.

8. Verfahren nach Anspruch 6,
**dadurch gekennzeichnet,**
**dass** die erhöhte Betätigungskraft durch einen Anschlag der Lenkvorrichtung bewirkt wird, bei dessen Erreichen mit einer Zeitverzögerung, insbesondere nach 100 ms, der zweite Kurvenfahrmodus von der Steuerung eingestellt wird.

9. Verfahren nach einem der Ansprüche 6 bis 8,
**dadurch gekennzeichnet,**
**dass** durch einen Sensor eine Betätigungskraft der Lenkvorrichtung erfasst wird.

10. Verfahren nach einem der Ansprüche 6 bis 9,
**dadurch gekennzeichnet,**
**dass** durch einen Sensor ein Betätigungsweg, insbesondere ein Drehwinkel, der Lenkvorrichtung erfasst wird.

11. Verfahren nach einem der Ansprüche 1 bis 10,
**dadurch gekennzeichnet,**
**dass** die taktile Rückmeldung aus einer durch einen Fahrer wahrnehmbaren Vibration besteht.

12. Verfahren nach Anspruch 11,
**dadurch gekennzeichnet,**
**dass** eine Vibration einer Lenkbetätigungsvorrichtung, insbesondere eines Lenkrades und/oder eines Lenkradknaufes, und/oder eine Vibration einer Bodenplatte und/oder eines Fahrpedal erzeugt wird.

13. Verfahren nach Anspruch 11 oder 12,
**dadurch gekennzeichnet,**
**dass** eine Vibration des Fahrantriebs durch die Steuerung erzeugt wird.

## Claims

1. Method for controlling the steering system of an industrial truck (2) which has a drive axle (9) with drive wheels (8, 8a, 8b) of which the rotation speed can be individually controlled, in particular drive wheels (8, 8a, 8b) which can be individually driven by in each case one traction drive motor, and also with a steering axle (4) with steered wheels (3), the rotation axes (12) thereof, when cornering, being oriented substantially to a common intersection point (5) on a front axle line (6) which is defined by the rotation axis (7) of the drive wheels (8, 8a, 8b), wherein, in a first cornering mode, a rotation speed difference between the drive wheels (8, 8a, 8b) is set in accordance with the radius to the intersection point (5) and the cornering speed by a control system,
**characterized**
**in that**, when the steered wheels (3) are at maximum steering lock, a greater rotation speed difference between the drive wheels (8, 8a, 8b) than corresponds to the geometric radius to the intersection point (5) is set by the control system in a second cornering mode, so that the steered wheels (3) of the steering axis (4) are skewed and run around a virtual intersection point (15) with a smaller radius than the geometric radius, wherein, when moving from the first cornering mode to the second cornering mode, optical and/or acoustic and/or tactile feedback is provided to the driver.

2. Method according to Claim 1,
**characterized**
**in that**, owing to the rotation speed difference, the drive wheels (8, 8a, 8b) have opposite directions of rotation and the virtual intersection point (15) lies between the drive wheels (8, 8a, 8b) on the front axle line (6).

3. Method according to Claim 1 or 2,
**characterized**
**in that** the drive wheels (8, 8a, 8b) are each individually driven by an electric traction drive motor.

4. Method according to one of Claims 1 to 3,
**characterized**
**in that** the steered wheels (3) are connected by a track rod.

5. Method according to one of Claims 1 to 4,
**characterized**
**in that** optical and/or acoustic and/or tactile feedback is provided to the driver in the second cornering mode.

6. Method according to one of Claims 1 to 5,
**characterized**
**in that** the tactile feedback comprises an increased operating force of a steering apparatus, in particular of a steering wheel.

7. Method according to Claim 6,
**characterized in that**
the increased operating force is implemented by an additional spring force before a stop of the steering apparatus.

8. Method according to Claim 6,
**characterized**
**in that** the increased operating force is implemented by a stop of the steering apparatus, the second cornering mode being set by the control system with a time delay, in particular after 100 ms, when the said stop is reached.

9. Method according to one of Claims 6 to 8,
**characterized**
**in that** an operating force of the steering apparatus is detected by a sensor.

10. Method according to one of Claims 6 to 9,
**characterized**
**in that** an operating movement, in particular a rotation angle, of the steering apparatus is detected by a sensor.

11. Method according to one of Claims 1 to 10,
**characterized**
**in that** the tactile feedback comprises a vibration which can be felt by a driver.

12. Method according to Claim 11,
**characterized**
**in that** a vibration of a steering operating apparatus, in particular of a steering wheel and/or of a steering wheel knob, and/or a vibration of a base plate and/or of an accelerator pedal is generated.

13. Method according to Claim 11 or 12,
**characterized**
**in that** a vibration of the traction drive is generated by the control system.

## Revendications

1. Procédé de commande de la direction d'un chariot de manutention (2), qui présente un essieu moteur (9) avec des roues motrices (8, 8a, 8b) dont la vitesse de rotation est réglable individuellement, en particulier des roues motrices (8, 8a, 8b) entraînées individuellement chacune par un moteur d'entraînement de roulage, ainsi qu'avec un essieu directeur (4) avec des roues pivotantes (3), dont les axes de rotation (12) sont orientés lors d'un trajet en courbe essentiellement vers un point d'intersection commun (5) sur une ligne axiale avant (6), qui est définie par l'axe de rotation (7) des roues motrices (8, 8a, 8b), dans lequel dans un premier mode de roulage en courbe on règle une différence de vitesse de rotation des roues motrices (8, 8a, 8b) au moyen d'une commande correspondant au rayon au point d'intersection (5) ainsi qu'à la vitesse de roulage en courbe, **caractérisé en ce que** pour le pivotement maximal des roues pivotantes (3) dans un second mode de roulage en courbe on règle au moyen de la commande une plus grande différence de vitesse de rotation des roues motrices (8, 8a, 8b) que celle qui correspond au rayon géométrique au point d'intersection (5), de telle manière que les roues pivotantes (3) de l'essieu directeur (4) présentent une course oblique et roulent autour d'un point d'intersection virtuel (15) avec un rayon plus petit que le rayon géométrique, dans lequel, lors du passage du premier mode de roulage en courbe au second mode de roulage en courbe, on produit un message d'information optique et/ou acoustique et/ou tactile pour le conducteur.

2. Procédé selon la revendication 1, **caractérisé en ce qu'**en raison de la différence de vitesse de rotation les roues motrices (8, 8a, 8b) présentent des sens de rotation opposés et que le point d'intersection virtuel (15) se situe sur la ligne axiale avant (6) entre les roues motrices (8, 8a, 8b).

3. Procédé selon la revendication 1 ou 2, **caractérisé en ce que** les roues motrices (8, 8a, 8b) sont entraînées individuellement chacune par un moteur d'entraînement de roulage électrique.

4. Procédé selon l'une quelconque des revendications 1 à 3, **caractérisé en ce que** les roues pivotantes (3) sont reliées par une barre d'accouplement.

5. Procédé selon l'une quelconque des revendications 1 à 4, **caractérisé en ce que** l'on produit un message d'information optique et/ou acoustique et/ou tactile pour le conducteur dans le second mode de roulage en courbe.

6. Procédé selon l'une quelconque des revendications 1 à 5, **caractérisé en ce que** le message d'information tactile consiste en une force d'actionnement accrue d'un dispositif de direction, en particulier d'un volant de direction.

7. Procédé selon la revendication 6, **caractérisé en ce que** l'on provoque la force d'actionnement accrue au moyen d'une force élastique supplémentaire avant une butée du dispositif de direction.

8. Procédé selon la revendication 6, **caractérisé en ce que** l'on provoque la force d'actionnement accrue au moyen d'une butée du dispositif de direction qui, lorsqu'elle est atteinte, entraîne, avec un retard temporel, en particulier après 100 ms, le réglage du second mode de roulage en courbe par la commande.

9. Procédé selon l'une quelconque des revendications 6 à 8, **caractérisé en ce que** l'on détecte au moyen d'un capteur une force d'actionnement du dispositif de direction.

10. Procédé selon l'une quelconque des revendications 6 à 9, **caractérisé en ce que** l'on détecte au moyen d'un capteur une course d'actionnement, en particulier un angle de rotation, du dispositif de direction.

11. Procédé selon l'une quelconque des revendications 1 à 10, **caractérisé en ce que** le message d'information tactile est constitué par une vibration perceptible par un conducteur.

12. Procédé selon la revendication 11, **caractérisé en ce que** l'on produit une vibration d'un dispositif d'actionnement de direction, en particulier d'un volant de direction et/ou d'un bouton de volant de direction, et/ou une vibration d'une plaque de plancher et/ou d'une pédale de conduite.

13. Procédé selon la revendication 11 ou 12, **caractérisé en ce que** l'on produit une vibration de l'entraînement de roulage au moyen de la commande.
